# DEMANDE DE BREVET EUROPEEN

(11) **EP 2 728 422 A1**
(43) Date de publication de la demande: **07.05.2014**
(21) Numéro de dépôt: 12191479.0
(22) Date de dépôt: 06.11.2012
(51) Int. Cl.: G04B 37/22

(54) **Composant d'habillage d'horlogerie bi-métal soudé**

(71) Demandeur: The Swatch Group Research and Development Ltd., 2074 Marin (CH)
(72) Inventeur: Knuchel, Daniel, 2502 Biel (CH)
(74) Mandataire: Giraud, Eric

(57) **Abrégé**

Procédé de fabrication d'un composant d'habillage (100) d'horlogerie comprenant les étaps suivantes :
- on se munit d'une embase (10) métallique réalisée en un premier matériau comportant du titane ou/et un premier alliage de titane,
- on se munit d'une plaque de recouvrement (20) métallique réalisée dans un deuxième matériau, ledit deuxième matériau comportant un deuxième métal choisi parmi l'or et le platine et le palladium ou/et un deuxième alliage comportant au moins de l'or ou du platine ou du palladium, ladite plaque de recouvrement (20) étant d'une épaisseur supérieure ou égale à 0,5 millimètre ;
- on soude ladite plaque de recouvrement (20) sur ladite embase (10) de façon à former une ébauche bi-métallique (30);
- on conforme ou/et on usine ladite ébauche bi-métallique (30) pour donner audit composant de structure (100) sa forme finale.

## Description

### Domaine de l'invention

L'invention concerne un procédé de fabrication d'un composant d'habillage d'horlogerie.

L'invention concerne encore un composant d'habillage d'horlogerie.

L'invention concerne encore une pièce d'horlogerie, notamment une montre, comportant au moins un tel composant d'habillage.

L'invention concerne le domaine de l'horlogerie, de la joaillerie, et de la bijouterie.

### Arrière-plan de l'invention

La fabrication de composants d'habillage d'horlogerie est souvent réalisée en métaux nobles, tels qu'or ou platine, de façon à assurer une excellente résistance à la corrosion. Toutefois ces métaux sont de densité élevée, et les pièces d'horlogerie ainsi réalisées, notamment des montres, sont très lourdes pour l'utilisateur, et de surcroît d'un coût de revient élevé. Un matériau comme l'or est malléable, et ses qualités mécaniques sont moyennes, ce qui oblige, bien souvent, à sélectionner des alliages d'or plus résistants, mais aussi plus sensibles à la corrosion, avec des variations d'aspect dans le temps.

### Résumé de l'invention

L'invention se propose d'offrir une alternative à l'utilisation de composants d'habillage d'horlogerie entièrement réalisés en métaux nobles_

A cet effet, l'invention concerne un procédé de fabrication d'un composant d'habillage d'horlogerie, **caractérisé en ce que :**
- on se munit d'une embase métallique réalisée en un premier matériau comportant du titane ou/et un premier alliage de titane,
- on se munit d'au moins une plaque de recouvrement métallique réalisée dans un deuxième matériau, ledit deuxième matériau comportant un deuxième métal choisi parmi l'or et le platine et le palladium ou/et un deuxième alliage comportant au moins de l'or ou du platine ou du palladium, ladite au moins une plaque de recouvrement étant d'une épaisseur supérieure ou égale à 0,5 millimètre ;

- on soude ladite au moins une plaque de recouvrement sur ladite embase de façon à former une ébauche bi-métallique;
- on conforme ou/et on usine ladite ébauche bi-métallique pour donner audit composant de structure sa forme finale.

L'invention concerne encore un composant d'habillage d'horlogerie, **caractérisé en ce qu'il** est en matériau bi-métallique comportant une embase métallique réalisée en un premier matériau comportant du titane ou/et un premier alliage de titane, et au moins une plaque de recouvrement métallique réalisée dans un deuxième matériau comportant un deuxième métal choisi parmi l'or et le platine et le palladium ou/et un deuxième alliage comportant au moins de l'or ou du platine ou du palladium.

Selon une caractéristique de l'invention, ladite embase et ladite plaque de recouvrement sont soudées l'une avec l'autre, et ladite plaque de recouvrement est d'une épaisseur supérieure ou égale à 0,5 millimètre.

L'invention concerne encore une pièce d'horlogerie, notamment une montre, comportant au moins un tel composant d'habillage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et en perspective, un composant d'habillage selon l'invention, avec une plaque de recouvrement soudée sur une embase en profilé ;
- la figure 2 représente, de façon schématisée et en perspective, un composant d'habillage selon l'invention, avec une plaque de recouvrement soudée sur une embase et emboutie avec elle après soudage ;
- la figure 3 représente, de façon schématisée et en perspective, un composant d'habillage selon l'invention, avec une plaque de recouvrement comportant une découpe et soudée sur une embase en profilé au niveau d'une partie seulement de la surface inférieure de la plaque de recouvrement faisant face à cette embase;
- la figure 4 représente, de façon schématisée et en perspective, une ébauche bi-métallique selon l'invention, avec une plaque de recouvrement comportant une ouverture traversante et soudée sur une embase, et la figure 5 représente, en coupe transversale, un composant d'habillage obtenu par parachèvement de l'ébauche bi-métallique de la figure 4, avec formation du profil extérieur par emboutissage et/ou usinage, et usinage après soudage d'une ouverture, de façon à constituer, par exemple, une lunette de montre;
- la figure 6 représente, de façon schématisée et en perspective, un composant d'habillage selon l'invention, avec une plaque de recouvrement comportant des alésages de positionnement et des ouvertures traversantes, soudée sur une embase comportant des pions de positionnement en correspondance avec les alésages de la plaque;
- la figure 7 représente, de façon schématisée et en section transversale, un composant d'habillage analogue à celui de la figure 2, avec un embouti profond réalisé après soudage ;
- la figure 8 représente, de façon schématisée et en perspective, un composant d'habillage selon l'invention, avec une plaque de recouvrement soudée sur une embase en profilé au niveau d'une partie seulement de la surface inférieure de la plaque de recouvrement faisant face à cette embase;
- la figure 9 représente, de façon schématisée et en perspective, un composant d'habillage selon l'invention, analogue à celui de la figure 8 et comportant des découpes d'usinage en forme de H réalisées sur l'ensemble après soudage ;
- la figure 10 représente, de façon schématisée et en perspective, un composant d'habillage selon l'invention, avec deux plaques de recouvrement soudées sur une même embase en profilé au niveau d'une partie seulement de la surface inférieure de la plaque de recouvrement faisant face à cette embase;
- la figure 11 représente, de façon schématisée et en perspective, un composant d'habillage selon l'invention, analogue à la figure 10, et dont quatre ailes latérales sont galbées par emboutissage après soudage ;
- la figure 12 représente, de façon schématisée et en section transversale, un composant d'habillage selon l'invention, comportant deux plaques de recouvrement en alliage d'or ou de platine ou de palladium soudées de part et d'autre d'une embase en titane ou en alliage de titane ;
- la figure 13 représente, sous forme d'un schéma-blocs, le procédé de fabrication d'un composant selon l'invention :

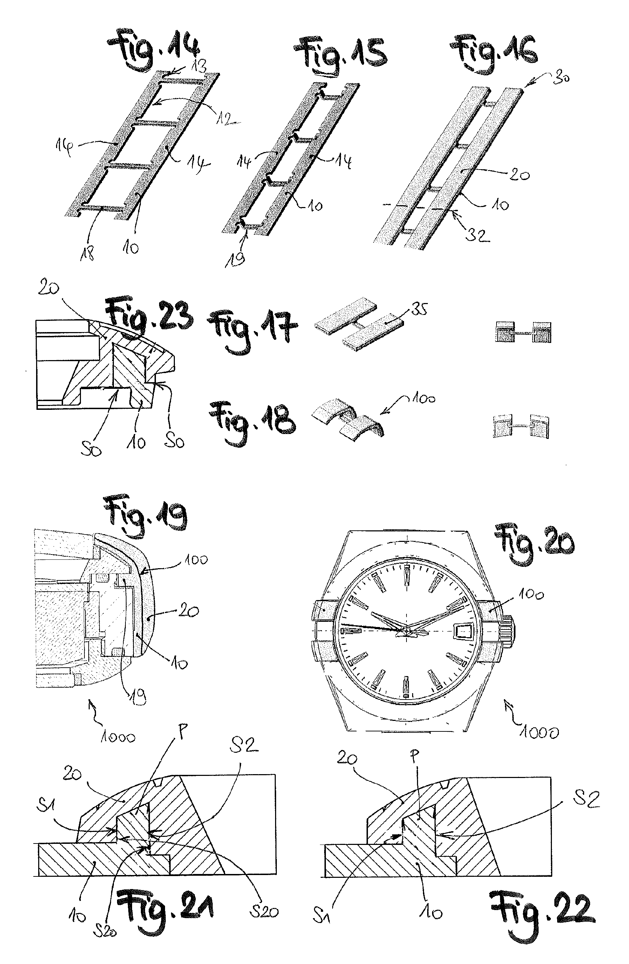

- les figures 14 à 20 illustrent la fabrication de griffes pour montre : la figure 14 montre, en perspective la préparation d'une embase en titane, avec des découpes et des ouvertures traversantes, la figure 15 montre le pliage préalable de cette embase pour transformer en étrier des traverses venues de découpe à la première opération, la figure 16 montre l'ébauche bi-métallique après soudage de plaques de recouvrement en or sur certaines surfaces de l'embase, la figure 17 montre, en perspective et en vue de bout, un tronçon obtenu par sciage de cette ébauche, lequel est ensuite conformé par déformation pour constituer le composant d'habillage représenté à la figure 18, en l'occurrence une griffe, montrée en position sur une boîte de montre aux figures 19 en section transversale, et en figure 20 en vue en plan ;
- les figures 21 et 22 représentent, en coupe, l'assemblage d'une plaque de recouvrement et d'une embase, avant et après sertissage au niveau d'un profil en tenon de l'embase coopérant avec un profil en mortaise de la plaque de recouvrement ;
- la figure 23 représente, en coupe, une plaque de recouvrement déjà sertie sur une embase, et visualise des zones de soudage entre cuir et chair aux surfaces de jonction.

### Description détaillée des modes de réalisation préférés

L'invention se propose d'offrir une alternative à l'utilisation de composants d'habillage d'horlogerie entièrement réalisés en métaux nobles, notamment en alliage d'or ou de platine ou de palladium, et donc très lourds pour l'utilisateur, et d'un coût de revient élevé.

En particulier dans le cas de composants de montres, qui constituent l'application préférentielle de l'invention, même si celle-ci est directement applicable pour des composants de bijouterie ou de joaillerie, les composants d'habillage doivent présenter une excellente résistance à la corrosion, tout en ayant de bonnes qualités mécaniques.

L'invention se propose de combiner, sur un même composant d'habillage, les avantages de haute tenue mécanique d'un premier constituant, ci-après dénommé « embase », choisi dans un matériau sélectionné à la fois pour sa tenue mécanique et sa résistance à la corrosion, et les avantages d'aspect et de haute résistance à la corrosion d'au moins un deuxième constituant, ci-après dénommé « plaque de recouvrement ». L'invention concerne des composants massifs, dont l'épaisseur E de chaque constituant est, de préférence, supérieure à 0,5 millimètre.

En effet, comme on le voit dans la suite de l'exposé, l'invention incorpore une opération de soudage. Cette opération est d'autant mieux maîtrisable que les composants à souder ensemble sont épais, et d'épaisseur comparable. Naturellement, l'invention peut encore être mise en oeuvre avec des épaisseurs de constituants plus basses, par exemple supérieures à 0,2 millimètre.

Ainsi, l'invention concerne un procédé de fabrication d'un composant d'habillage 100 d'horlogerie. Selon ce procédé :
- on se munit d'une embase 10 métallique réalisée en un premier matériau comportant du titane ou/et un premier alliage de titane,
- on se munit d'au moins une plaque de recouvrement 20 métallique réalisée dans un deuxième matériau, ce deuxième matériau comportant un deuxième métal choisi parmi l'or et le platine et le palladium ou/et un deuxième alliage comportant au moins de l'or ou du platine ou du palladium, cette au moins une plaque de recouvrement 20 étant d'une épaisseur E supérieure ou égale à 0,5 millimètre ;
- on soude cette au moins une plaque de recouvrement 20 sur cette embase 10 de façon à former une ébauche bi-métallique 30;
- on conforme ou/et on usine cette ébauche bi-métallique 30 pour donner audit composant de structure 100 sa forme finale.

De préférence, on choisit ce premier alliage et ce deuxième alliage avec un taux de nickel nul.

En ce qui concerne l'embase 10, on choisit avantageusement pour ce premier matériau de cette embase 10 du titane « grade 2 » ou du titane « grade 5 » ou du titane « T35 ». Le titane « grade 2 » est particulièrement approprié à une soudure de qualité avec un alliage d'or 18 carats. Le titane et ses alliages constituent une famille présentant des qualités mécaniques analogues à celles des aciers, pour une masse très inférieure à celle des aciers, en même temps qu'une très bonne résistance à la corrosion, notamment au brouillard salin.

De préférence, on choisit pour ce deuxième matériau un alliage d'or 18 carats ou un alliage de platine avec au moins 95% de platine ou un alliage de palladium avec au moins 75% de palladium.

Quand il s'agit d'un alliage d'or, on choisit avantageusement pour ce deuxième matériau un alliage d'or 18 carats de type « 5N ».

Le choix du couple particulier or-titane est particulièrement efficace pour limiter la corrosion.

Dans une variante, le deuxième matériau est du palladium ou un alliage de palladium. L'emploi du palladium se prête, comme l'or ou le platine, à une fixation durable de la plaque de recouvrement 20 sur l'embase 1, de façon à former une ébauche bi-métallique 30, par sertissage, ou/et brasage ou/et soudage.

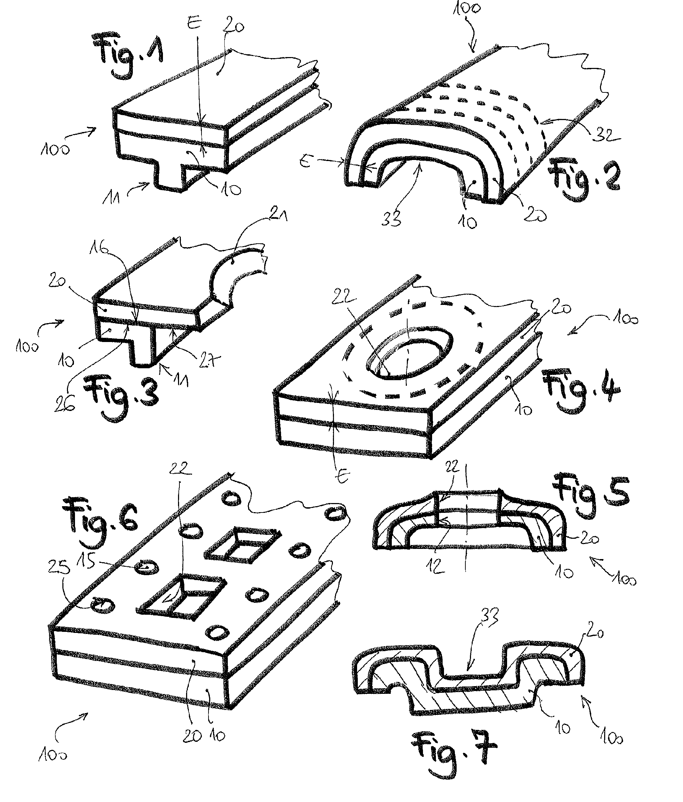

Dans certaines variantes de réalisation, tel que visible par exemple sur la figure 2, on conforme cette ébauche bi-métallique 30 par déformation en étampage ou/et en emboutissage.

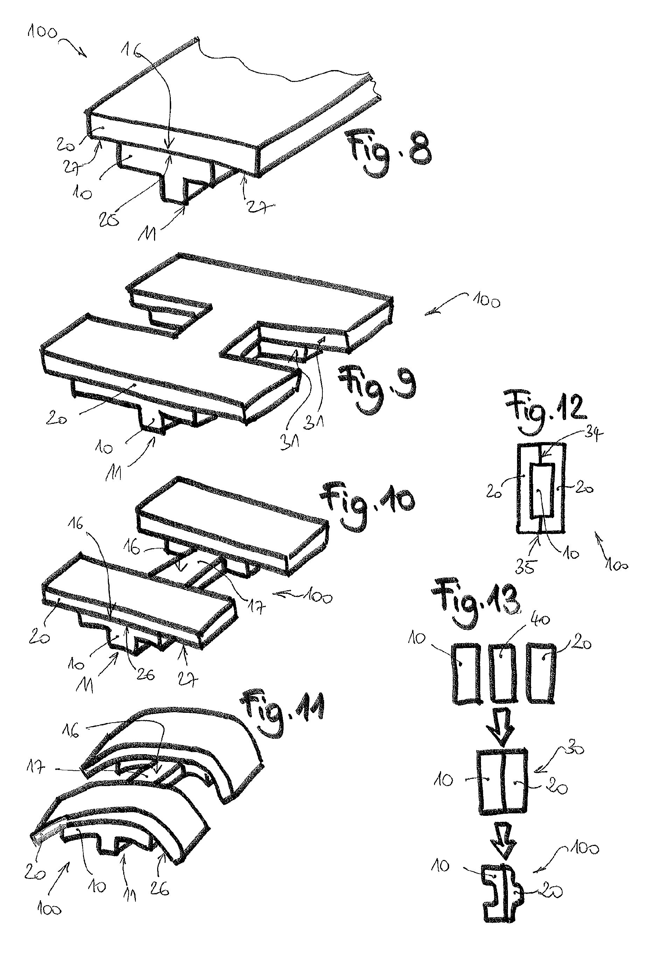

Dans d'autres variantes, comme illustré sur la figure 10 ou 11, on usine cette ébauche bi-métallique 30 pour enlever localement cette plaque de recouvrement 20, de façon à rendre localement visible au moins une surface 16 de l'embase 10.

Dans une réalisation avantageuse pour la fixation du composant 100 sur une montre ou similaire, on choisit avantageusement cette embase 10 sous forme d'un profilé 11.

Dans certaines applications, tel que visible sur la figure 3 ou 4, on choisit cette plaque de recouvrement 20 pré-usinée avec au moins une découpe 21 ou/et ouverture traversante 22.

Pour un positionnement relatif optimal, on prépare avantageusement, avant de les souder l'une sur l'autre, cette embase 10 et cette plaque de recouvrement 20 avec des repères 15, 25, en relief ou/et en creux, tel que visible sur la figure 6, pour leur mise en correspondance géométrique avant cette opération de soudage et pour leur maintien relatif l'une par rapport à l'autre pendant cette opération de soudage.

Dans une variante, tel que visible sur les figures 1, 2, 4, 6, ou 10, on soude cette plaque de recouvrement 20 sur cette embase 10 au niveau de la totalité de leur surface commune de contact.

Dans une variante de réalisation illustrée à la figure 23, on effectue le soudage entre cuir et chair au niveau de la surface de joint S0 entre la plaque de recouvrement 20 et l'embase 10.

Dans une variante de réalisation, on effectue le soudage par laser.

Dans une variante de réalisation, on effectue le soudage par ultra-sons.

Dans une variante avantageuse de réalisation, avant de souder la plaque de recouvrement 20 sur l'embase 10, on exerce sur au moins la plaque de recouvrement 20 ou l'embase 10 une action mécanique de déformation pour son sertissage sur respectivement l'embase 10 ou la plaque de recouvrement 20.

De préférence, on effectue cette action mécanique de déformation sur la plaque de recouvrement 20.

Dans une variante avantageuse de réalisation, tel que visible sur les figures 21 et 22, on réalise un profil en tenon P sur l'embase, destiné à coopérer avec un profil en mortaise de la plaque de recouvrement , ou inversement. Le tenon P de l'embase comporte deux surfaces latérales opposées S1 et S2, la plaque de recouvrement 20 associée comporte deux surfaces S20 de mortaise parallèles. Lors du sertissage les surfaces S20 sont plaquées contre les surfaces S1 et S2 pour pincer la protubérance P, et, ainsi, forment avec elle un ensemble indémontable.

Le sertissage or-titane permet un bon appui de l'or sur le titane, et une géométrie précise, que vient parachever le soudage, qui est facilité par ce bon appui préalable.

L'exemple des figures 4 et 5 montre, de façon simplifiée, la réalisation d'une lunette de montre, avec confection préalable d'une ébauche bi-métallique 30 à partir d'une plaque de recouvrement 20 comportant une ouverture traversante 22 et soudée sur une embase 10. Cette ébauche 30 est ensuite mise en forme par déformation ou/et usinage, avec formation du profil extérieur par emboutissage et/ou usinage, et usinage après soudage d'une ouverture 12 dans l'embase 10 dans le prolongement de l'ouverture 22, ou en reprise de cette ouverture 22 à la fois dans l'embase 10 et dans la plaque de recouvrement 20.

Dans d'autres variantes, on soude cette plaque de recouvrement 20 sur cette embase 10 au niveau d'une partie seulement de la surface 26 de cette plaque de recouvrement 20 faisant face à cette embase 10, ou/et au niveau d'une partie seulement de la surface 16 de cette embase 10 faisant face à cette plaque de recouvrement 20.

On comprend naturellement que la notion de « bi-métallique » n'est pas restrictive, car l'embase 10 peut être réalisée elle-même selon l'invention, et comporter plusieurs couches soudées deux à deux : l'invention s'applique aussi à un composant d'habillage 100 de type sandwich, et comportant deux plaques de recouvrement 20 en alliage d'or ou de platine ou de palladium soudées de part et d'autre d'une embase 10 en titane ou en alliage de titane. Une telle configuration peut être nécessaire pour des contraintes d'aspect. Le noyau en titane garantit la rigidité et un positionnement parfait par rapport aux autres composants de la pièce d'horlogerie. Tel que visible sur la figure 12, les plaques de recouvrement 20 peuvent être jointives entre elles au niveau d'une surface de jonction 34, ou d'un plan de joint si elles sont planes, et être soudées ou soudées or sur or au niveau de la couture 35. L'invention peut, ainsi s'étendre à la fabrication de composants volumineux, réalisés par soudage deux à deux de surfaces antagonistes, l'une en titane ou alliage de titane, et l'autre en or ou platine ou palladium ou alliage d'or ou alliage de platine ou alliage de palladium.

L'invention concerne encore un composant d'habillage 100 d'horlogerie en matériau bi-métallique comportant une embase 10 métallique réalisée en un premier matériau comportant du titane ou/et un premier alliage de titane, et au moins une plaque de recouvrement 20 métallique réalisée dans un deuxième matériau comportant un deuxième métal choisi parmi l'or et le platine et le palladium ou/et un deuxième alliage comportant au moins de l'or ou du platine ou du palladium. De préférence cette embase 10 et cette plaque de recouvrement 20 sont soudées l'une avec l'autre, et cette plaque de recouvrement 20 est d'une épaisseur E supérieure ou égale à 0,5 millimètre.

L'invention concerne encore une pièce d'horlogerie, notamment une montre 1000, comportant au moins un tel composant d'habillage 100.

Les figures 14 à 20 illustrent un exemple, non limitatif, de fabrication de griffes 100 pour une montre 1000:
- tel que visible sur la figure 14, une embase 10 en titane, est découpée, à partir d'une feuille ou planche, avec des découpes 13 et des ouvertures traversantes 12, de façon à former une structure en échelle avec des surfaces d'appui latérales 14 reliées par des traverses 18 ;
- tel que visible sur la figure 15, ces traverses 18 sont pliées de façon à former des étriers 19, l'embase est alors prête pour recevoir les plaques de recouvrement 20 ;
- deux plaques de recouvrement en or 20 sont soudées sur les surfaces d'appui latérales 14 de l'embase 10, tel que visible sur la figure 16, l'ébauche bi-métallique 30 est ainsi obtenue ;
- la figure 17 montre un tronçon 35 obtenu par sciage ou découpage, le long d'une ligne de sciage 32, de cette ébauche 30 ;
- ce tronçon 35 est ensuite conformé par déformation pour constituer le composant d'habillage 100 représenté à la figure 18, en l'occurrence une griffe, montrée en position sur une boîte de montre aux figures 19 et 20.

L'invention se prête particulièrement bien à la réalisation de composants d'habillage, tels que lunettes, de griffes, de boîtes, de maillons de bracelet, de fermoirs, cette liste n'étant nullement limitative. Elle offre à l'utilisateur des composants de haute qualité, avec une combinaison de métaux nobles utilisés en forte épaisseur et soudés sur des alliages ou métaux plus légers, garantissant la résistance aux déformations et aux contraintes mécaniques, tout en procurant un allègement plus agréable au porter.

## Revendications

1. Procédé de fabrication d'un composant d'habillage (100) d'horlogerie, **caractérisé en ce que :**
- on se munit d'une embase (10) métallique réalisée en un premier matériau comportant du titane ou/et un premier alliage de titane,
- on se munit d'au moins une plaque de recouvrement (20) métallique réalisée dans un deuxième matériau, ledit deuxième matériau comportant un deuxième métal choisi parmi l'or et le platine et le palladium ou/et un deuxième alliage comportant au moins de l'or ou du platine ou du palladium, ladite au moins une plaque de recouvrement (20) étant d'une épaisseur (E) supérieure ou égale à 0,5 millimètre ;
- on soude, sans apport de matière, ladite au moins une plaque de recouvrement (20) sur ladite embase (10) de façon à former une ébauche bi-métallique (30);
- on conforme ou/et on usine ladite ébauche bi-métallique (30) pour donner audit composant de structure (100) sa forme finale.

2. Procédé selon la revendication 1, **caractérisé en ce qu'**on choisit ledit premier alliage et ledit deuxième alliage avec un taux de nickel nul.

3. Procédé selon l'une des revendications précédentes, **caractérisé en ce qu'**on choisit pour ledit premier matériau de ladite embase (10) du titane « grade 2 » ou du titane « grade 5 » ou du titane « T35 ».

4. Procédé selon l'une des revendications précédentes, **caractérisé en ce qu'**on choisit pour ledit deuxième matériau un alliage d'or 18 carats ou un alliage de platine avec au moins 95% de platine ou un alliage de palladium avec au moins 75% de palladium.

5. Procédé selon la revendication précédente, **caractérisé en ce qu'**on choisit pour ledit deuxième matériau un alliage d'or 18 carats de type « 5N ».

6. Procédé selon l'une des revendications précédentes, **caractérisé en ce qu'**on conforme ladite ébauche bi-métallique (30) par déformation en étampage ou/et en emboutissage.

7. Procédé selon l'une des revendications précédentes, **caractérisé en ce qu'**on usine ladite ébauche bi-métallique (30) pour enlever localement ladite plaque de recouvrement (20).

8. Procédé selon l'une des revendications précédentes, **caractérisé en ce qu'**on choisit ladite embase (10) sous forme d'un profilé (11).

9. Procédé selon l'une des revendications précédentes, **caractérisé en ce qu'**on choisit ladite plaque de recouvrement (20) pré-usinée avec au moins une découpe (21) ou/et ouverture traversante (22).

10. Procédé selon l'une des revendications précédentes, **caractérisé en ce qu'**on prépare, avant de les souder l'une sur l'autre, ladite embase (10) et ladite plaque de recouvrement (20) avec des repères (15 ; 25) en relief ou/et en creux pour leur mise en correspondance géométrique avant ladite opération de soudage et pour leur maintien relatif l'une par rapport à l'autre pendant ladite opération de soudage.

11. Procédé selon l'une des revendications précédentes, **caractérisé en ce qu'**on soude ladite plaque de recouvrement (20) sur ladite embase (10) au niveau de la totalité de leur surface commune de contact.

12. Procédé selon l'une des revendications 1 à 10, **caractérisé en ce qu'**on soude ladite plaque de recouvrement (20) sur ladite embase (10) au niveau d'une partie seulement de la surface (26) de ladite plaque de recouvrement (20) faisant face à ladite embase (10), ou/et au niveau d'une partie seulement de la surface (16) de ladite embase (10) faisant face à ladite plaque de recouvrement (20).

13. Procédé selon la revendication 12, **caractérisé en ce qu'**on effectue ledit soudage entre cuir et chair au niveau de la surface de joint (S0) entre ladite plaque de recouvrement (20) et ladite embase (10).

14. Procédé selon l'une des revendications précédentes, **caractérisé en ce qu'**on effectue ledit soudage par laser.

15. Procédé selon l'une des revendications précédentes, **caractérisé en ce qu'**on effectue ledit soudage par ultra-sons.

16. Procédé selon l'une des revendications précédentes, **caractérisé en ce que**, avant de souder ladite plaque de recouvrement (20) sur ladite embase (10), on exerce sur au moins ladite plaque de recouvrement (20) ou ladite embase (10) une action mécanique de déformation pour son sertissage sur respectivement ladite embase (10) ou ladite plaque de recouvrement (20).

17. Procédé selon la revendication précédente, **caractérisé en ce que** on effectue ladite action mécanique de déformation sur ladite plaque de recouvrement (20).

18. Composant d'habillage (100) d'horlogerie, **caractérisé en ce qu'il** est en matériau bi-métallique comportant une embase (10) métallique réalisée en un premier matériau comportant du titane ou/et un premier alliage de titane, et au moins une plaque de recouvrement (20) métallique réalisée dans un deuxième matériau comportant un deuxième métal choisi parmi l'or et le platine et le palladium ou/et un deuxième alliage comportant au moins de l'or ou du platine ou du palladium.

19. Composant d'habillage (100) selon la revendication précédente, **caractérisé en ce que** ladite embase (10) et ladite plaque de recouvrement (20) sont soudées l'une avec l'autre, et **en ce que** ladite plaque de recouvrement (20) est d'une épaisseur (E) supérieure ou égale à 0,5 millimètre.

20. Composant d'habillage (100) selon la revendication 18 ou 19, comportant deux dites plaques de recouvrement (20) en alliage d'or ou de platine ou de palladium soudées de part et d'autre d'une dite embase (10) en titane ou en alliage de titane.

21. Pièce d'horlogerie ou montre (1000), comportant au moins un composant d'habillage (100) selon l'une des revendications 18 à 20.
